(19) Europäisches Patentamt

European Patent Office

Office européen des brevets

(11) **EP 1 376 886 A1**

(12) **EUROPEAN PATENT APPLICATION**

(43) Date of publication:
**02.01.2004 Bulletin 2004/01**

(51) Int Cl.⁷: **H04B 1/707**

(21) Application number: **02254221.1**

(22) Date of filing: **17.06.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Agilent Technologies, Inc. - a Delaware corporation -**
**Palo Alto, CA 94303-0870 (US)**

(72) Inventor: **Lugil, Nico**
**Agilent Technologies Belgium**
**3110 Rotselaar (BE)**

(74) Representative: **Coker, David Graeme et al**
**Agilent Technologies UK Ltd,**
**Legal Department,**
**M/S CSC1GM2,**
**Eskdale Road,**
**Winnersh Triangle**
**Wokingham, Berks RG41 5DZ (GB)**

(54) **Rake receiver delay line design**

(57) The present invention is related to a method for positioning fingers of a spread spectrum rake receiver, comprising the steps of:

• Providing a delay line arranged to provide time shifted versions of an input signal,
• Providing a switch arranged to select appropriate time shifted versions of said input signal to provide output signals with a predetermined resolution,

Characterised in that the method further comprises the step of interpolating selected output signals of the switch and to provide an instance of a time shifted multipath signal to said fingers.

Fig. 2

EP 1 376 886 A1

**Description**

**Field of the invention**

The present invention is related to a receiver for IMT-2000 spread-spectrum signals, more particularly to a novel structure for a rake for such a receiver.

**State of the art**

When a signal is transmitted over a wireless channel, reflections of this transmitted signal on different objects will lead to identical signals with various and variable strength and phase. The receiver can and will receive these different reflections. Not all reflections will arrive at the same time (i.e. the path TX-reflection-RX is almost always different for different reflections, leading to phase difference). In the same way, as the path travelled by every signal can be different, the signal strength will vary. The receiver will thus receive time shifted versions of the same transmitted signal. A multipath is the sum of separate reflection with about the same Tx/Rx delay. As those multipaths are the sum of all signals arriving at the receiver at about the same moment, a very small shift of receiver position can change the phase and amplitude of each multipath considerably, because the separate signals the multipath signal is consisted of will change phase, leading to more or less signal extinction due to phase difference of the individual paths. This can result in a dramatic change in phase and amplitude of the combined multipath when the receiver is moved.

Since the phase and amplitude and delay of every multipath are changing in time, high quality signal reception is cumbersome, especially for the mobile user.

When CDMA is used for transmission/reception, the multipaths that have a phase difference of more than about the length of 1 chip are typically detectable separately (assuming good auto correlation properties of the CDMA code).

The purpose of a rake receiver, usually comprised in a CDMA receiver apparatus, is to combine coherently the multipaths to increase the receiver performance. To do a coherent combining a channel estimation and correction is needed per multipath. Traditional rakes thus comprise searchers (to search new multipaths), multipath trackers (used for following a shifting multipath signal) and combiner fingers (combining comprises to perform channel estimation, channel correction and to make the estimated and corrected signal available for adding to the final, combined signal so that the different channel corrected streams can be combined in a coherent way with the appropriate gain). The signals captured by the combiner fingers are combined to a combined strong signal in a coherent way.

When a CDMA signal is transmitted, every symbol is transmitted as a sequence of chips at a much higher rate than the symbol rate. This sequence of chips is called a PN code. The receiver will regenerate this PN code to detect the symbols. This regenerated PN code must be aligned with the incoming PN code, i.e. the receiver must know the phase of the incoming PN codes, which is not the case when the CDMA receiver is just turned on.

The goal of the chip time acquisition is to for example by trying all possible phases and observing which possibility returns the best result (= most energy).

The current rakes as used in receivers have a delay line to align multipaths with each other and with the rake fingers. The input from the fingers can come from some specific point in the delay line, depending on the time shift of the multipath. As the delays between the multipaths are random and not merely e.g. multiples of the chiplength, the best performance can be obtained when alignment of the multipaths with the fingers and with each other is optimal. This can be case if the resolution of the delay line is very high. Further, the delay line needs to have a certain length (a multitude of the chip length) in order to capture the maximal useful delay between the multipaths.

Evidently, a rake receiver has to be implemented at least partly in hardware, therefore it is a factor that influences the overall production cost and it also has implications for battery life in mobile receivers. For a fixed length (in time or in chips), the resolution of the delay line is directly correlated with the number of elements that have to be in the delay line. Further, a higher resolution also means a higher clock rate for the delay line. Typically, a minimum of 4 times over sampling (4 times the chip speed) needs to be used for the delay line to obtain acceptable results. A prior art delay line is thus an important hardware cost factor and uses a lot of battery power, both of which are negative factors when designing mobile telecommunication devices.

**Aims of the invention**

The present invention aims to provide a novel more efficient way of multipath signal combining to produce an enhanced signal. In particular, the present invention wishes to provide a cheaper spread spectrum receiver design while at least maintaining signal reception quality.

**Summary of the invention**

The present invention concerns mainly a method for positioning fingers of a spread spectrum rake receiver, comprising the steps of:

- Providing a delay line arranged to provide time shifted versions of an input signal,
- Providing a switch arranged to select appropriate time shifted versions of said input signal to provide output signals with a predetermined resolution,

characterised in that the method further comprises the step of interpolation of selected output signals of the switch and to provide an instance of a time shifted multipath signal to said fingers. Preferably, the step of interpolation comprises the steps of:

- Selecting output signals from the switch, and
- Combining said selected output signals to an instance of a time shifted multipath signal with an increased resolution compared to the predetermined resolution.

The method of the present invention can be further characterised in that the selected output signals are adjacent signals. The step of interpolation can be a linear, quadratic, or exponential interpolation of the selected output signals, or any other known interpolation method.

Another embodiment of the present invention is an integrated circuit comprising means for implementing the method of the present invention.

A further embodiment of the present invention is a computer program product arranged for execution on a computer device of all the steps of the method of the present invention.

The present invention further comprises a rake receiver comprising means for executing all steps of the method of the present invention.

Another embodiment of the present invention is a spread spectrum receiver comprising means for executing all steps of the method of the present invention.

**Short description of the drawings**

Fig. 1 represents a rake receiver design as known from the prior art.

Fig. 2 shows a rake receiver design comprising interpolation as in the present invention.

**Detailed description of the invention**

The present invention is related to a novel way of using delay lines in rake receivers.

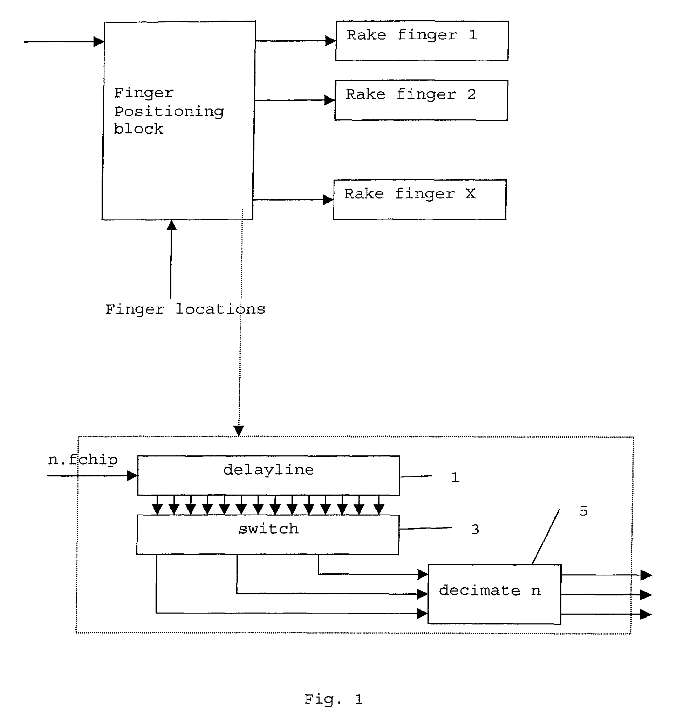

As explained higher, a prior art rake receiver comprises a delay line 1 as shown in figure 1. The delay line 1 takes the incoming signal (a superposition of time shifted multipaths). The fingers will take as input some point in the delay line in order to align the finger with the multipath. The delay line's clock frequency is a multitude n of the chip rate (fchip), usually n being 4 or 8. This way, acceptable resolution of the delay line is obtained. The switch allows each finger to choose where it will take its input from the delay line and the clock frequency is decimated to the original chip rate (5).

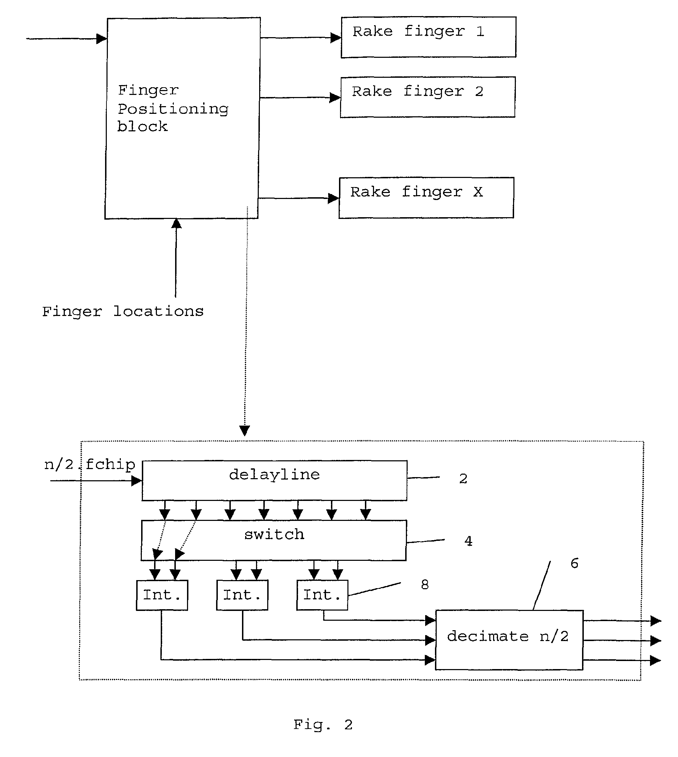

The rake receiver according to the invention can be seen schematically in figure 2. The delay line 2 is e.g. only clocked at half the speed of the prior art delay line (n/2. fchip). Two adjacent outputs of the delay line 2 can be interpolated (8) after switch 6 to obtain a combined signal, which in this example has to be decimated by n/2 (6) to obtain a signal at the chip rate fchip.

**Example 1:**

**Interpolation method**

In this setup a simple linear interpolation bis used. Interpolated samples are calculated as follows:

$$\text{Interpolated sample} = (x_i + x_{i+1}) / 2$$

where $x_i$ and $x_{i+1}$ are 2 consecutive samples.

Any other interpolation method can be used, i.e. other formula, or higher order.

**Influence of sampling instant resolution on Bit Error Rate (BER)**

In a CDMA system it is important to sample the chipstream at the correct moment in time. In this way the locally generated code is best aligned with the incoming code and the best BER is obtained.

The following table illustrates the effect of missampling and the usage of an interpolator. The simple linear interpolator is used in this setup. For the sampling and the difference was translated in an equivalent implementation loss using the BASK Eb/No vs BER curve.

A typical PN code and Eb/No were used.

| Loss by missampling half chip | 3 dB |
| Loss by missampling 0.25 chip | 0.93 dB |
| Loss by interpolating between half chip before and after the ideal sampling moment | 1 dB |
| Loss by interpolating between 0.25 chip before and after the ideal sampling moment | 0.06 dB |

So it would mean that if one keeps the resolution of the delay line half chips and do nothing else (i.e. maximum error = 0.25 chip), one could have a loss of 0.93 dB (worst case).

Now by not doubling the delay line, but only introducing the interpolation, one can reduce this 0.93 dB loss to 0.06 dB.

**Claims**

1.  Method for positioning fingers of a spread spectrum rake receiver, comprising the steps of:

    •   Providing a delay line arranged to provide time shifted versions of an input signal,
    •   Providing a switch arranged to select appropriate time shifted versions of said input signal to provide output signals with a predetermined resolution,

        **Characterised in that** the method further comprises the step of interpolation of selected output signals of the switch and to provide an instance of a time shifted multipath signal to said fingers.

2.  Method as in claim 1, wherein the step of interpolation comprises the steps of:

    •   Selecting output signals from the switch, and
    •   Combining said selected output signals to an instance of a time shifted multipath signal with an increased resolution compared to the predetermined resolution.

3.  Method as in claim 1 or 2, **characterised in that** the selected output signals are adjacent signals.

4.  Method as in any of the claims 1 to 3, **characterised in that** the step of interpolation is a linear, quadratic, or exponential interpolation of the selected output signals.

5.  An integrated circuit comprising means for implementing the method of any of the claims 1 to 4.

6.  A computer program product arranged for execution on a computer device of all the steps of any of the claims 1 to 4.

7.  A rake receiver comprising means for executing all steps of the method as in any of the claims 1 to 4.

8.  A spread spectrum receiver comprising means for executing all steps of the method as in any of the claims 1 to 4.

Finger
Positioning
block

Rake finger 1

Rake finger 2

Rake finger X

Finger locations

n.f chip

delayline

1

switch

3

5

decimate n

Fig. 1

Fig. 2

**European Patent Office**

**EUROPEAN SEARCH REPORT**

Application Number

EP 02 25 4221

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 977 369 A (ROKE MANOR RESEARCH) 2 February 2000 (2000-02-02) * the whole document * | 1-8 | H04B1/707 |
| A | US 6 201 828 B1 (KOTOV ANATOLI V ET AL) 13 March 2001 (2001-03-13) * abstract * * column 3, line 49 - column 4, line 48; figure 2 * | 1-8 | |
| A | EP 1 065 794 A (NIPPON ELECTRIC CO) 3 January 2001 (2001-01-03) * abstract * | 1-8 | |

TECHNICAL FIELDS SEARCHED (Int.Cl.7)

H04B

The present search report has been drawn up for all claims

| Place of search | Date of completion of the search | Examiner |
|---|---|---|
| THE HAGUE | 22 November 2002 | Ó Donnabháin, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 25 4221

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2002

| Patent document cited in search report | | Publication date | Patent family member(s) | | Publication date |
|---|---|---|---|---|---|
| EP 0977369 | A | 02-02-2000 | GB<br>CN<br>EP | 2340352 A<br>1264225 A<br>0977369 A2 | 16-02-2000<br>23-08-2000<br>02-02-2000 |
| US 6201828 | B1 | 13-03-2001 | AU | 5932799 A | 18-05-2000 |
| EP 1065794 | A | 03-01-2001 | JP<br>JP<br>EP | 3322243 B2<br>2001016136 A<br>1065794 A2 | 09-09-2002<br>19-01-2001<br>03-01-2001 |

EPO FORM P0459